# EUROPEAN PATENT APPLICATION

(11) **EP 3 332 872 A1**
(43) Date of publication of application: **13.06.2018**
(21) Application number: 17204351.5
(22) Date of filing: 29.11.2017
(51) Int. Cl.: B01L 3/02, B01L 9/00, G01N 35/10, B01L 3/00

(54) **TRANSFER TOOL FOR USE IN AUTOMATED ANALYSER SYSTEM**

(30) Priority: 06.12.2016 LU 93333
(71) Applicant: Stratec Biomedical AG, 75217 Birkenfeld-Graefenhausen (DE)
(72) Inventor: Ralf, Griebel, 76228 Karlsruhe (DE)
(74) Representative: Tegethoff, Sebastian

(57) **Abstract**

The invention relates to a device for storing and transferring liquids like samples and regents. The present disclosure provides a device for storing and transferring liquids in an automated analyser system, comprising at least one cavity for taking up a liquid and further at least one transfer tool for taking up a liquid, wherein the transfer toll is connected by at least one predetermined braking point with the device.

## Description

### Field of the Invention

The invention relates to a device for storing and transferring liquids like samples and regents.

### Background of the invention

Automated analyser systems for use in clinical diagnostics and life sciences are produced by a number of companies. For example, the Stratec Biomedical AG, Birkenfeld, Germany, produces a number of devices for specimen handling and detection for use in automated analyser systems and other laboratory instrumentation.

In current diagnostics, life sciences and biotechnology applications, either manual or automated, a variety of plastics are used in large numbers. In particular tools for the transfer of any kind of specimen like samples or reagents are necessary. The transfer tools have to match the automated analyzer systems as well as different kinds of container, vessel or cartridges for processing the samples and/or reagents.

Manual or automated procedures are necessary to avoid any kind of type mismatch between transfer tool and system components. In certain applications it is necessary to provide the presence or correct position of a tool to transfer any kind of sample or reagent. Any of those procedures need a lot of attention in manufacturing or on the level of application by a user and therefore are expensive and prone to error. Especially, the requirement to avoid risks or mismanagement in the field of in-vitro diagnostics is a major burden.

Known solutions from the prior art comprise either completely separated means for taking up a sample or reagent and a tool for transferring the sample or reagent. The tool for transfer is placed apart from the means for taking up a sample or reagent. The tool for transfer can be hold in place in a rack by tape, foil and/or glue which needs to be removed prior to using the tool.

The known solutions from the prior art are related to certain disadvantage. An additional interface is necessary between the means for taking up a reagent or sample and the separated tool for transfer. The tool for transfer and the vessels for performing reactions by bringing liquid components together are manufactured in different processes, resulting in an extra effort (manual or automated) in manufacturing and for the end user in placing the tool for transfer and the means for performing reactions into the automated analyzer.

Measures are necessary to guarantee an exact positioning of the tool for transfer within or next to the means for taking up the sample and/or reagent in the automated analyzer or simply to ensure that a tool for transfer is available in the automated analyzer.

The tools for transfer and the means for performing reactions are usually provided separately in automated devices with additional measures, e.g. sensors, to make sure tools for transfer are available and measure for monitoring to make sure enough tools for transfer are available. However, handling of loose tools for transfer by an end users is prone to error, e.g. when removing a foil on top of tools for transfer which securing save transportation.

Further disadvantages of solutions from the prior art relate to technical measures being necessary, e.g. sensors, to ensure the use of a correct transfer tool regarding size, volume, coating or material of transfer tools. One example is the usage of different transfer tools (e.g. different coating) which have to match to different Disposable Cartridges (e.g. filled with different reagents) need to be coded to match in an automated immunoassay instrument available on the market using coated pipetting tips which have to match to a prefilled and sealed cartridge. Both, the pipetting tip and the cartridge are color coded and have human readable identification letters to be matched by the operator during insertion into the instrument. In addition and machine readable 2-dimensional barcode is applied to the pipetting tip and the cartridge to be double-checked by the immunoassay instrument after insertion.

Difficult manual and automated handling of loose transfer tools hanging in racks, e.g. 96 disposable tip racks, 384 disposable tip racks or sheaths racks are also related to the risk of mishandling.

In US patent 5,576,214 a method of supplying disposable tips is disclosed. The tips are arranged as an array of tips for multiple loading onto plural aspirators, wherein the array comprises columns of tips temporarily joined together within and between columns, at discontinuously spaced junctions. The array is moved along in tracks spaced so as to diverge when tip columns are to be broken out of the array. Each track ends in a step-down ledge that allows an aspirator to punch an engaged tip out of its column.

German Utility Model DE 93 08 889 U1 discloses a block comprising multiple pipette tips that are connected by predetermined breaking points.

US. 2016/0033543 A1 describes an automated biological-sample-processing system comprising a pipette, a column of solid-phase material to which nucleic acid binds, a transport apparatus, an air-piston apparatus and an adaptor for coupling the pipette to the transport apparatus and to the air-piston apparatus, in which the adaptor is removably engageable with the transport apparatus and the air-piston apparatus for movement with the transport apparatus during processing of the sample, is couplable to the pipette so that the transport apparatus is controllable to position the pipette and so that the air-piston apparatus is controllable to draw a liquid into the pipette and to expel the liquid from the pipette, and is engageable with the column, in which the adaptor comprises a filter for preventing liquid or aerosol transfer between the pipette or column and the air-piston apparatus.

None of the document teaches a device reducing the risk of mishandling of tools for transfer and for performing chemical reactions or providing liquids necessary therefore.

### Object of the Invention

It is an object of the present invention to provide a device providing cavities for storing and processing of liquids as well as for their transfer.

### Summary of the Invention

The present disclosure provides a device for storing and transferring liquids in an automated analyser system, comprising at least one cavity having a solid base for taking up a liquid and further at least one transfer tool that is part of the device for taking up and moving a liquid, wherein the at least one transfer tool is connected by at least one predetermined braking point with the device so that it is separable from the device by an upward or downward movement due to the arrangement of the predetermined braking points. The at least one transfer toll is a separate part of the device, but belongs to the device.

The at least one predetermined breaking points can be bars, pins, springs or tongue and grooves.

The at least one transfer tool can be molded-in into the device, be molded in parallel into the device (2-component-molding) or be an insert of any material of the mold (injection-molding around insert).

The at least one transfer tool and the sample holder are thus made of the same material and/ or the at least one transfer tool is molded-in into the device of a different material or the at least one transfer tool is an insert of any material placed into a predetermined recess within the device.

The sample holder and the at least one transfer tool can be made of plastic.

The transfer tool can be a pipette tip, a magnet, a loop or a spoon.

The device may further comprise a at least one reservoir for taking up or prefilled with a buffer or reagent necessary for performing a reaction, at least one cavity for taking up a sample or reagent and at least one compartment for disposal of buffer, reagents, samples or reaction solutions or the used at least one transfer tool.

The at least one cavity for taking up a sample or reagent can be a vessel, well, a multi-well plate, a bottle or a test tube. It is intended that the sample holder can be disposable.

The device may be configured that a used at least one transfer tool can be substituted with an unused transfer tool.

The volume of the at least one transfer tool may correspond to the volume of the at least one cavity for taking up a sample or reagent.

A liquid comprises a sample, buffer, reagent, reaction solution, a powder, beads and a mixture of liquid and solids.

### Summary of the Figures

The invention will be described on the basis of figures. It will be understood that the embodiments and aspects of the invention described are only examples and do not limit the protective scope of the claims in any way. The invention is defined by the claims and their equivalents. It will be understood that features of one aspect or embodiment of the invention can be combined with a feature of a different aspect or aspects and/or embodiments of the invention. It shows:
- Figure 1: First embodiment of a device with two transfer tools and six cavities for taking up a liquid
- Figure 2: Magnification of connection of transfer tool with device
- Figure 3: Sectional view of first embodiment
- Figure 4: Second embodiment of a device with eight transfer tools and 64 cavities for taking up a liquid

### Detailed Description of the Invention and the Figures

The present disclosure provides a device comprising a cavity or multiple linked cavities capable to take up buffers or reagents (fluidic, powder or lyophilized), beads and/or patient samples and further a molded-in transfer tool, connected by at least one predetermined breaking point with the device). The device like a disposable cartridge can be made of plastics, e.g. polypropylen.

Handling a liquid within the meaning of the instant invention refers to moving a liquid from one place to another. Liquids may be moved from a place for storage or a reation vessel to another place for further processing or disposal. A cavity within the meaning of the present invention designates a hollow space having a solid base like a hole or a recess.

A reagent within the meaning of the instant invention comprises a buffer, solution or any liquid that may be necessary for performing a reaction. A reagent may comprise compounds for staining, binding or antibodies.

A sample refers to probe that shall be further processed in reaction or that shall be analysed.

The Disposable Transfer Tool can be
a. of the same plastics than the device and molded in into one step together with the device having at least one cavity,
b. of any plastic material molded in parallel (2-component-molding), or
c. an insert of any material of the mold for the Disposable Cartridge (injection-molding around insert).

Molding all parts of the device in one step has advantages in handling the device as well as regards easy manufacture and packing. The device is a tool used to transfer material, typically out of or into its cavities, e.g. pipetting tip/pin for liquid transfer, sheath for bead transfer or loop/spoon for e.g. feces.

During uptake of the molded-in transfer tool, preferably by an automated device (e.g pipettor), the transfer tool will break out of the device by applying a downward vertical force to the transfer tool. Afterwards the Transfer Tool moves out of the devices and can be used for transfer tasks within and outside of the device.

The device may be hold in place by mechanical means, because by retracting the transfer tool out of the device upward forces might occur relocating the device. Optionally, after usage of the transfer tool it can be deposited in the device.

The device including molded-in transfer tools can be used for various applications in the field of diagnostics, life sciences and biotechnology, particularly for POCT (point of care testing). In POCT the user will load a small number of Disposable Cartridges, preferably one, to an automated device.

Furthermore, transfer tools can be molded-in into simple holders to ease supply of many Transfer Tools, e.g. complex handling of loose disposable tips in so called tip racks.

A major advantage of the present invention is to provide in one device transfer tools as well as cavities for providing liquids and/or performing reactions of chemical or physical nature like diagnostic assays including binding reactions. Transfer tool and cavity are separate parts of a device of the present invention. Further advantages of the invention can be summarized for manufacturing, for automation and for the end user as follows:
- Only one mold and molding process is necessary for the manufacture of the device with at least one transfer tool
- no additional interface between device and a separate transfer tool is necessary
- No extra effort (manual or automated) is needed in manufacturing or for the end user to place transfer a tool into the device
- No measures are necessary to ensure that a Transfer Tool cannot be removed from or fall out of the device
- No measures necessary to guarantee exact positioning of the Transfer Tool within the device for automated access
- No measures are necessary to make sure that at least one transfer tool is available in the device
- No separate supply of transfer tools in automated devices is necessary with additional measures, e.g. storage, sensors, to ensure sure that at least one transfer tools is available and measure for monitoring to ensure that enough transfer tools are available
- No handling of loose transfer tools by end users which is prone to error, e.g. when removing foils on top of a transfer tool which is applied for safety reasons during transportation
- No measures necessary, e.g. sensors, to ensure that the right transfer tool, e.g. size, coating or material of pipetting tips, is used or available
- A used transfer tools cannot be reinserted again
- No difficult manual and automated handling of loose transfer tools hanging in racks, e.g. 96 disposable tip racks, 384 disposable tip racks or sheaths racks

### Detailed description of the figures

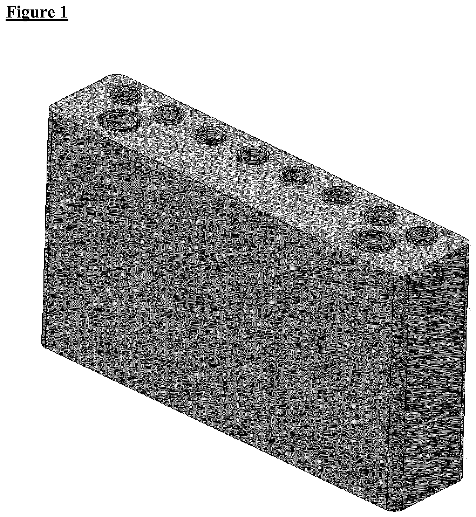

Figure 1 shows an embodiment of a first embodiment of a device 1 of the invention having eight cavities 5 and two transfer tools 10. The shape of the device can vary according to the needed shape of a device holder of an automated analyser system.

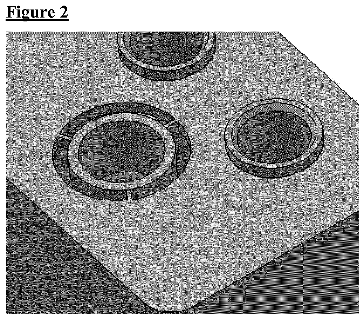

Figure 2 shows a detailed view of the connection of transfer tool 10 with device 1, which is in the embodiment of figure 2 a disposable tip for a pipette. Neighbouring cavities 5 are also depicted. The transfer tool is connected to the device 1 by predetermined breaking points 11, which are formed as bars.

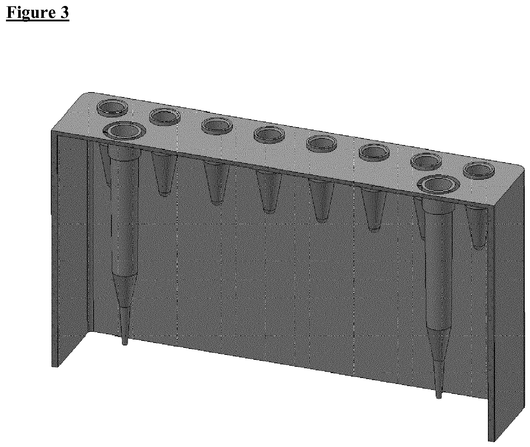

Figure 3 shows a sectional view of the first embodiment of figure 1 of device 1. The transfer tool 10, arranged next to cavities 5 on both sides of device 1have to be shorter than the height of device 1.

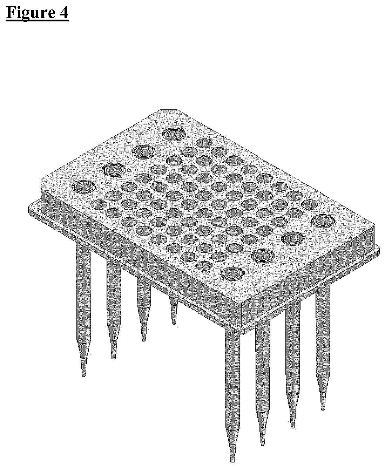

Figure 4 shows a second embodiment of device 1 with 64 cavities 5 and eight transfer tools 10. In contrast to the embodiment shown in figure 3, the transfer tools 10 are longer than the device 1 and have thus a larger volume than the cavities 5.

### Reference Number List

- 1: device
- 5: cavity
- 10: transfer tool
- 11: braking points

## Claims

1. A device for storing and transferring liquids in an automated analyser system, comprising at least one cavity having a solid base for taking up a liquid and further at least one transfer tool that is part of the device for taking up and moving a liquid, wherein the at least one transfer tool is connected by at least one predetermined braking point with the device and is separable from the device by an upward or downward movement.

2. The device of claim 1, wherein the at least one predetermined breaking points are bars, pins, springs or tongue and grooves.

3. The device of claim 1 or claim 2, wherein the at least one transfer tool is molded-in into the device.

4. The device of any one of claims 1 to 3, wherein the at least one transfer tool and the at least one cavity for taking up a reaction solution are made of the same material.

5. The device of any one of claims 1 to 4, wherein the at least one sparate transfer tool is molded-in into the device using a different material.

6. The device of any one of claims 1 to 5, wherein the device and the at least one transfer tool are both made of plastic.

7. The device of any one of claims 1 to 6, wherein the at least one transfer tool is an insert of any material placed into a predetermined recess within the device.

8. The device of any one of claims 1 to 7, wherein the transfer tool is a pipette tip, a magnet, a loop or a spoon.

9. The device of any one of claims 1 to 8, further comprising at least one reservoir for taking up or prefilled with a buffer or reagent necessary for performing a reaction and/or at least one cavity for taking up a sample.

10. The device of any one of claims 1 to 9, further comprising at least one compartment for disposal of buffer, reagents, samples or reaction solutions or the used at least one transfer tool.

11. The device of any one of claims 1 to 10, wherein the at least one cavity having a solid base for taking up a sample or reagent is a vessel, well, a multi-well plate, a bottle or a test tube.

12. The device of any one of claims 1 to 11, wherein the at least one cavity for taking up a reaction solution is disposable.

13. The device of any of claims 1 to 12, wherein a used at least one transfer tool can be substituted with at least one unused transfer tool.

14. The device of any one of claims 1 to 13, wherein the volume of the at least one transfer tool corresponds to the volume of the at least one cavity for taking up a reaction solution.

15. The device of any one of claims 1 to 14, wherein a liquid comprises a sample, buffer, reagent, reaction solution, a powder, beads and a mixture of liquid and solids.
